# EUROPEAN PATENT SPECIFICATION

(11) **EP 2 628 384 B1**
(45) Date of publication and mention of the grant of the patent: **20.05.2015**
(21) Application number: 13155389.3
(22) Date of filing: 15.02.2013
(51) Int. Cl.: A01G 23/081, A01G 23/083

(54) **Multi-process machine for cutting and handling trees**
Multiprozess-Maschine zum Schneiden und Verarbeiten von Bäumen
Machine multifonctionnelle pour la découpe et la manipulation des arbres

(30) Priority: 15.02.2012 FI 20120047; 21.02.2012 FI 20125198
(43) Date of publication of application: 21.08.2013
(73) Proprietor: Ketonen, Lauri, 64100 Kristiinankaupunki (FI)
(72) Inventor: Ketonen, Lauri, 64100 Kristiinankaupunki (FI)
(74) Representative: Helke, Kimmo Kalervo

(56) References cited:
- WO-A1-01/10191
- US-A- 3 875 983
- US-A1- 2003 116 225

## Description

The present invention relates to a multi-process machine for cutting and handling trees, which is arranged to be suspended from the boom of a loader device, which said multi-process machine includes
- a frame,
- stripping grabs arranged to gather trees into a throat formed by them and the frame,
- a collector grapple pivoted to the frame with the aid of a pin, arranged to move between open and closed positions, and also to support the trees gathered into the throat,
- an operating device for operating the collector grapple, in which the collector grapple includes a first arm and a second arm pivoted to each other and arranged in such a way that the second arm can be pulled out from between the trees gathered in the throat.

A multi-process machine's collector grapple, which is disclosed in patent FI 123 155 B, is known from the prior art. In this case, the collector grapple is an accessory, which can be used in a so-called harvester head. The harvester head is a work device, which is suspended from a moving base machine by means of a lifting boom or similar. The control and drive power of the harvester head are taken from the base machine. The collector grapples are used in co-operation with the stripping grabs of the harvester head, in such a way that the collector grapples hold the trees gathered in the throat by the stripping grabs when the stripping grabs are open. The collector grapples are formed of two arms pivoted to each other, so that the collector grapples can pull out from between the trees when the stripping grabs hold the trees in place in the throat.

A drawback of the collector grapples of a multi-process machine according to the prior art is that the construction of the frame of the multi-process machine only permits a single collector grapple to be located in the multi-process machine. The structure of the frame is too weak for the use of two collector grapples. This is because the frame is formed out of two frame plates and four support structures securing them to each other. When using a single collector grapple, there are three separate support structures between the frame plates forming the frame, inside the area of the frame plates. However, these three support structures are located in such a way that they prevent a second collector grapple from being placed in the frame. If it is wished to use a second collector grapple, these support structures in the frame must be removed, in which case the frame can only be supported from outside the area of the frame plates, i.e. in other words from outside the frame. Such a construction will, however, be too weak to withstand the strains imposed upon it.

Another drawback with patent FI 123 155 B is that the placing of the hydraulic cylinder operating the collector grapples disadvantageous in terms of the use of power. The piston rod of the hydraulic cylinder is pivoted to the first arm of the collector grapple, which results in an excessively long stroke in the hydraulic cylinder, so that the collector grapple can be folded into a protected space. The long stroke leads to the use of a large hydraulic cylinder, which in turn is heavy and takes up even more space inside the frame.

The invention is intended to create a collector grapple for a multi-process machine that is better that the collector grapple of a multi-process machine according to the prior art, which has a stronger construction and permits the use of two collector grapples that rotate into a protected space. The characteristic features of the present invention are stated in the accompanying Claim 1.

This purpose can be achieved by means of a multi-process machine for cutting and handling trees, in which the second arm of the collector grapple of the multi-process machine includes a rotating support surface for rotating the second arm relative to the first arm, and the frame includes a counter-surface located in such a way that, when the collector grapple rotates, the support surface meets the counter-surface, rotating the second arm relative to the first arm into the protected space. The multi-process machine is arranged to be suspended on the boom of a loader device, and the multi-process machine includes a frame, stripping grabs arranged to gather trees into the throat formed by them and the frame, and a collector grapple pivoted to the frame with the aid of a pin and arranged to move between open and closed positions and also to support the trees gathered into the throat. Further, the collector grapple includes a first arm and a second arm pivoted to each other and arranged in such a way that the second arm can be pulled out from between the trees gathered into the throat.

By means of a such a multi-process machine construction, the multi-process machine according to the invention can be made simpler and lighter, and thus also cheaper, than multi-process machines according to the prior art. The support surface of the second arm of the collector grapple permits sufficient power to be produced for the second arm. With the aid of the support surface, the amount of rotation of the second arm at the end of the stroke can be increased, as the support surface multiplies the rotation of the second arm. The rotation of the first arm of the collector grapple can be less than 110°, preferably less than 90°. Thus, the stroke of the operating device can be kept moderately short and the size of the operating device will remain reasonable. In other words, the support surface is arranged to increase the rotation of the second arm.

The multi-process machine preferably includes a protected space inside the frame, into which the collector grapple is arranged to be rotated to protect it from impacts, and an operating device to operate the collector grapple. The protected space permits a position of the collector grapple, where it is out of the way of the trees during loading and, on the other hand, is protected from impacts.

The support surface is preferably a protrusion formed in the vicinity of the pivot between the first arm and the second arm. The protrusion rotates the second arm effectively around the shaft pin between the second arm and the first arm when the protrusion makes contact with the frame's counter-surface.

The protrusion is preferably essentially perpendicular to the longest dimension of the second arm. The perpendicular protrusion creates the greatest possible lever for the force rotating the second arm.

The protrusion is preferably located in the second arm at the location of the pivot between the first arm and the second arm. Thus, the lever of the force rotating the second arm is kept at a constant magnitude for the entire time that the protrusion acting as the support surface meets the support pin acting as the counter-surface.

The counter-surface is preferably a support pin attached between the plates belonging to the frame. The round shape of the support pin assists, by means of the protrusion, the second arm to rotate relative to the first arm. At the same time, the support pin acts as a reinforcement strengthening the frame.

The distance between the pivot pin and the counter-surface can be essentially as great as the distance between the support pin and the pivot. Thus, the protrusion and the counter-surface meet when the first arm rotates around the support pin.

The operating device is preferably pivoted to an extension belonging to the first arm, on the opposite side of the support pin relative to the pivot. Thus, a movement closing the collector grapple is created by increasing the length of the operating device. As the operating device is preferably a hydraulic cylinder, by means of the extension of the operating device, i.e an outwards directed movement of the piston rod of the cylinder, a greater force is achieved than by an inwards directed movement of the piston rod. In addition, the pivoting made in the extension permits the force closing the collection grapple to be at a maximum precisely when the collector grapples are lifting trees into the throat. Further, with the aid of the attachment made in the extension, the first arm can be shorter than in collector grapples according to the prior art, which lightens the structure of the multi-process machine.

The support pin can be located at a distance from the throat formed by the plates that is at most equal to the diameter of the support pin. The support pin then effectively reinforces the frame precisely from the side of the throat of the multi-process machine, where the forces twisting the frame are greatest. Further, by means of this location, the support pin is close to the throat, so that the rotation of the collector grapple remains small, even when the collector grapple is being rotated into the protected space.

The protrusion can include a bevelled point to facilitate rotation. The point directs the force towards the movement rotating the second arm.

According to one embodiment, the multi-process machine includes two collector grapples and two support pins. With the aid of the two collector grapples, the collection of trees into the throat of the multi-process machine is more efficient and the device is balanced. With the aid of the support pins, both collector grapples can be rotated into the protected space with the aid of a protrusion.

The support surface can be arranged to rotate the second arm 10 - 35°, preferably 15 - 25° relative to the first arm when the collector grapples are closed towards the protected space. The entire rotation of the first arm of the collector grapple can then remain smaller, thus shortening the stroke required from the operating device.

According to one embodiment, the first arm is pivoted directly to the frame. The structure will then be simple and sturdy.

The rotation of the first arm of the collector grapple can be less than 100°, preferably less than 90°. Such a small amount of rotation can be achieved with the aid of a considerably shorter stroke of the operating device than that of solutions of the prior art. The size of the operating device will then remain moderate and its weight will remain light. In this connection, the term rotation refers to the rotation of the first arm when the collector grapple moves between the open and closed positions.

The counter-surface is preferably located in such a way that, when using two collector grapples, the point of the second arm of the collector grapple on the other side relative to the centre line of the counter-surface of the frame will have enough clearance to pass the counter-surface on the other side relative to the centre line. It will then be possible to use two collector grapples for collecting the trees and two support pins for reinforcing the frame.

Both collector grapples are preferably operated with the aid of the same operating device. This will lighten the overall construction of the multi-process machine.

The collector grapples can be symmetrical. Their manufacture will then be easier and cheaper and it will be possible to operate them with the aid of the same operating device. The multi-process machine can include means for operating the collector grapples independently of each other. Thus, one collector grapple can hold the trees in the throat while the other collects additional trees into the throat.

The multi-process machine preferably includes a synchronization arm for synchronizing the operations of the collector grapples.

In the following, the invention is described in detail with reference to the accompanying drawings showing some embodiments of the invention, in which
- Figure 1: shows a schematic side view of a multi-process machine according to one embodiment of the invention,
- Figure 2: shows a schematic view of the construction of the multi-process machine according to the invention, when the collector grapples are in the open position,
- Figure 3: shows a schematic view of the construction of the multi-process machine according to the invention, when the collector grapples are in the collecting position,
- Figure 4: shows a schematic view of the construction of the multi-process machine according to the invention, when the collector grapples are in the protected space, and
- Figure 5: shows a schematic bottom view of the construction of the multi-process machine according to the invention, when the collector grapples are in the open position.

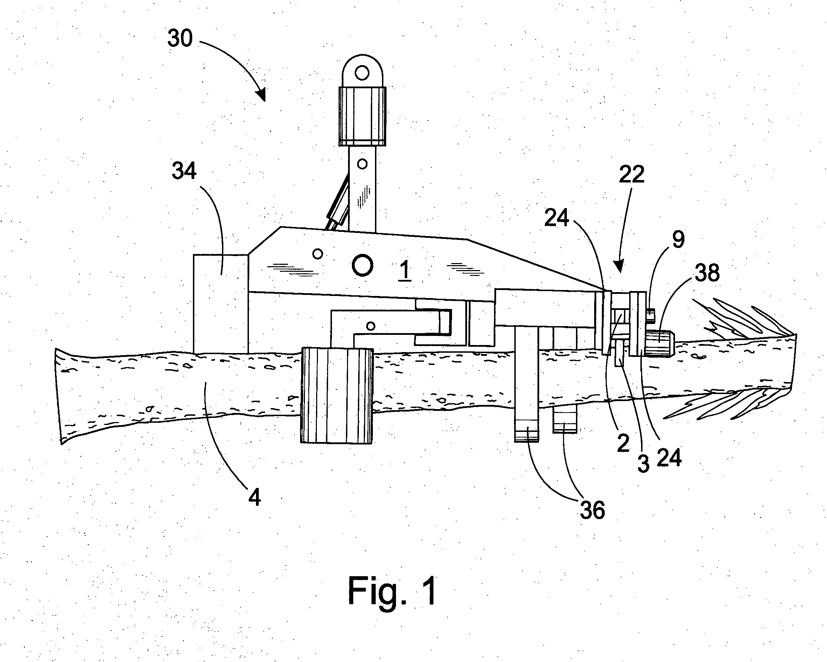

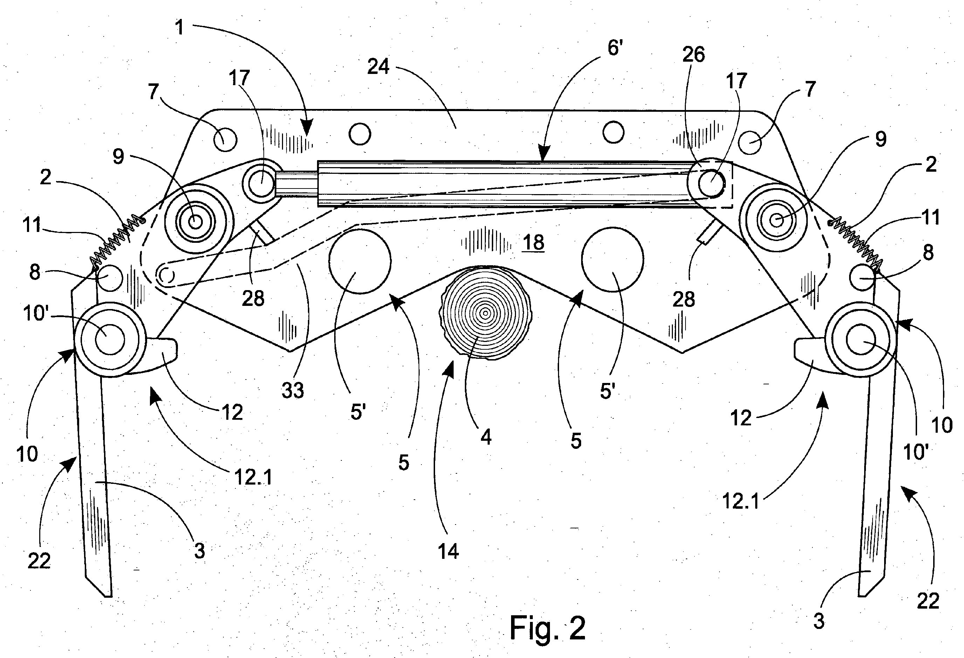

The multi-process machine according to the invention for cutting and handling trees is arranged to be suspended from the lifting boom of a loader device. According to Figure 1, the multi-process machine 30 includes a frame 1, a cutting device 34 fitted to the frame 1 for cutting trees 4, and a throat 14 (shown in Figure 2) for the collected trees 4. Further, the multi-process machine 30 includes stripping grabs 36 arranged to collect trees 4 and at least one collector grapple 22 pivoted to the frame 1 and arranged to move between and open and closed positions and further to support the trees collected in the throat. In this connection, the term closed position refers to a position, in which the collector grapple is in a protected space inside the frame. In the embodiment of Figure 1, the multi-process machine includes one collector grapple 22.

The collector grapple or grapples 22 are installed in the multi-process machine 30 at the front end of the multi-process machine 30. At the front end are generally located two moving stripping grabs 36 and a so-called fixed upper blade 38. The collector grapple or grapples 22 can be located between the stripping grabs 36 and the upper blade 38.

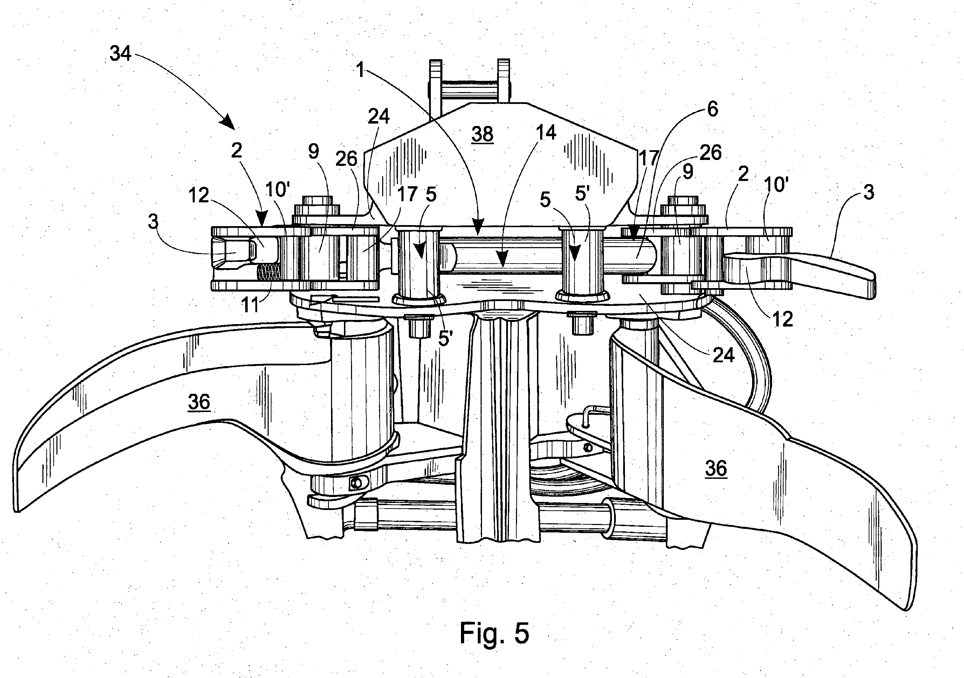

Figure 2 shows a schematic diagram of the operation of a stripping grab of the multi-process machine, seen in the longitudinal direction of the tree. To illustrate the principle, Figures 2 - 4 show only one plate 24 of the frame 1, though the frame 1 always includes at least two plates 24. In the embodiment shown in Figure 2, the multi-process machine 30 includes two collector grapples 22. The multi-process machine according to the invention can also be manufactured according to Figure 1 equipped with a single collector grapple. In Figure 2, the collector grapples 22 are depicted shown in the open position, shown in the longitudinal direction of the trees 4 being handled. The frame 1 of the multi-process machine 30 is preferably formed of two parallel plates 24, which are attached to each other with the aid of the pivot pins 9 of the first arms of the collector grapples 22 mounted in bearings between them and of support pins 5'. The plates 24 are more clearly visible in Figures 1 and 5. The plates 24 are thus parallel to the direction of motion of the collector grapples. The plates 24 of the frame 1 are preferably shaped as curves, in such a way that the plates 24 form a throat 14 for the trees 4. The frame 1 can be attached to the other parts of the multi-process machine with the aid of attachment holes 7. The collector grapples 22 are formed of a first arm 2 and a second arm 3 pivoted to it with the aid of a pivot 10.

There is preferably a spring 11 between the first arm 2 and the second arm 3, which rotates the second arm 3 into a position parallel to the first arm 2. The rotation of the second arm 3 relative to the first arm 2 is limited by a shaft 8 attached to the second arm 3, against which the second arm 3 rotates when the collector grapples 22 are in the open position.

According to Figure 1, between the parallel plates 24 of the frame 1 there is preferably also a counter-surface 5, which can be, for example, a support pin 5'. The counter-surface can also be part of the surface of the support pin. More specifically, the support pin 5' can be a round iron. When using two collector grapples 22, there can be two support pins 5'. According to Figure 2, the support pins 5' are preferably located on both sides of the throat 14, between the plates 24 of the frame 1, in such a way that a protected space 18 remains between the edge of the plates 24 and the support pins 5', into which the collector grapples 22 have space to rotate to be protected from impacts. Thus, the support pins 5' connect the plates 24 of the frame 1 in exactly the same way as the pivot pins 9, and the frame 1 is reinforced with the aid of the use of the support pins 5'. The support pins 5' should also be located in such a way that the operating device 6 operating the first arms 2 of the collector grapples 22, i.e. preferably the cylinder 6' will fit between the plates 24, on the other side of the support pins 5' relative to the throat 14. There is preferably one operating device 6, but the multi-process machine can also be manufactured using several operating devices. The support pin or pins 5' are generally located at a distance equal to at least the diameter of the support pin from the throat of the multi-process machine, in which case they will support the frame 1 at precisely the point that is acted upon most by the forces twisting the frame.

The protected space 18 is intended to protect the collector grapples from impacts when the collector grapples 22 are not in use. In the protected space 18, the collector grapples 22 are in a space delimited by the throat 14 and the support pins 5'. With the aid of the first arm 2 and second arm 3 of the collector grapples 22, which are pivoted relative to each other, the collector grapples 22 can be taken out of the protected space 18 even when there are trees 4 in the throat 14.

According to Figure 2, the cylinder 6' operating the collector grapples 22 is attached at its ends to extensions 26 of the first arms 2 with the aid of a pivot pin 17, which extensions are on the opposite side of the pivot pin 9 relative to the first arm 2. The first arm 2 is preferably pivoted directly to the frame 1 with the aid of the pivot pin 9, so that the structure becomes sturdy. The locating of the attachment point of the cylinder 6' and the first arm 2 on the extension 26 of the arm permits the cylinder 6' to be located farther from the throat 14 than in solutions according to the prior art. At the same time, the maximum power output is obtained for the collection of the trees, as the arm of the power produced by the cylinder 6' that rotates the collector grapples 22 is at its longest precisely during the tree-collection stage. Thus, the support pins 5' stiffening the structure of the frame 1 can fit between the plates 24 of the frame 1, without reducing the protection space 18 of the collector grapples 22. In addition, the locating of the cylinder 6' on the extension 18 of the first arm 2 permits the closing of the collector grapples 22 by extending the cylinder 6', in which case a larger force is made available than by shortening the cylinder 6'. The entire end surface area of the piston can be utilized in the extension.

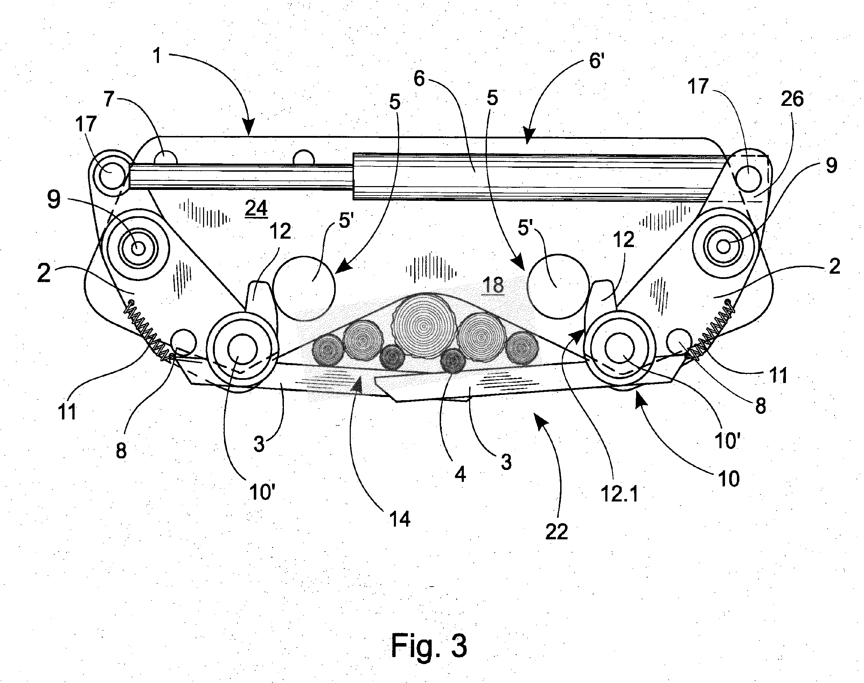

The opening of the collector grapples 22 can be limited by limiting the movement of the first arm 2 with the aid of a stop 28. When the collector grapples 22 are opened, the cylinder 6' is shortened, until the first arm 2 meets the stop 28 in the fully open position of the collector grapples 22. According to Figure 2, the second arm 3 of the collector grapples 22 includes a support surface 12 rotating the second arm 3, formed at the location of the pivot 10, i.e. preferably at the location of the shaft pin 10'. The support surface 12 is preferably essentially a protrusion 12.1 perpendicular to the longitudinal direction of the second arm 3. The purpose of the support surface 12 is to rotate the second arm 3 relative to the first arm 2 by 10 - 35°, preferably 15 - 25°, when the collector grapples 22 are being closed. The operation of the protrusion 12.1 is explained in greater detail in connection with Figure 3.

In Figure 2, the collector grapples 22 are shown in the open position. The open position is achieved with the aid of the cylinder 6' and a spring 11. By extending the cylinder 6' the first arm 2 rotates to the extreme position relative to the pivot pin 9. At the same time, the spring 11 rotates the second arm 3 relative to the first arm 2 against the shaft 8. In the fully open position, the second arm 3 of the collector grapple is preferably in a position essentially perpendicular relative to the cylinder 6'.

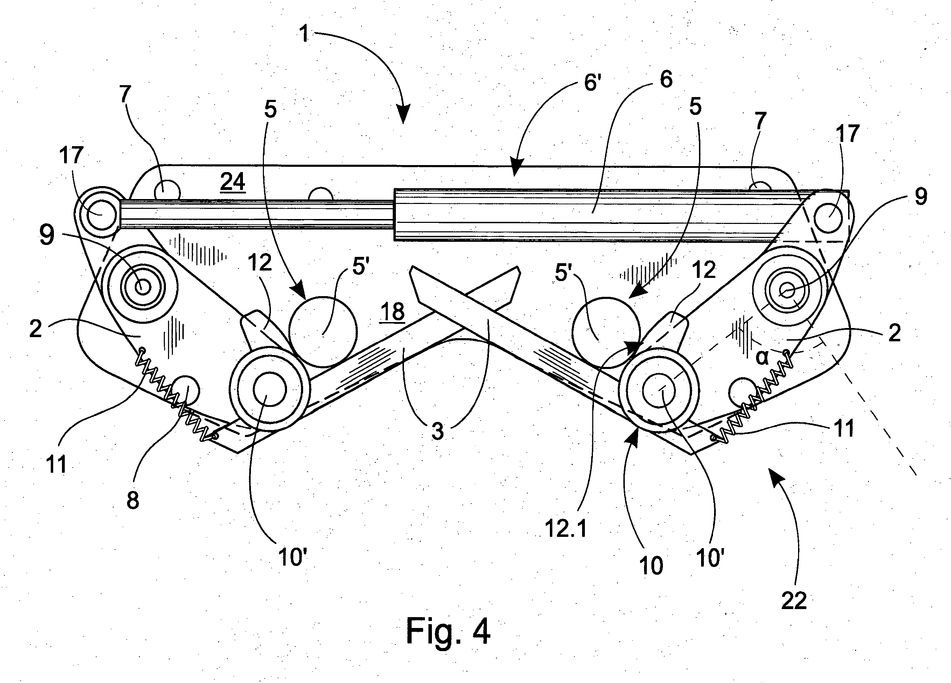

In collection position of Figure 3, the collector grapples 22 have collected trees 4 into the throat 14 while simultaneously rotating towards the throat 14 relative to the pivot pin 9. In this stage, the support surface 12 of the second arm 3 meets the support pin 5'. In this embodiment, the support surface 12 is preferably a moment-rotating protrusion 12.1. The point of the protrusion 12.1 meets the support surface 5' and rotates the protrusion 12.1 relative to the shaft pin 10'. Because the protrusion 12.1 is immovably attached to the second arm 3, the second arm 3 also rotates relative to the shaft pin 10' towards the throat 14. With the aid of the protrusion 12.1 and the support pin 5', the rotation of the second arm 3 can be increased relative to the rotation of the first arm 2 relative to the pivot pin 9. This in turn shortens the length required in the stroke of the cylinder 6'. The rotation α of the first arm 2 (Figure 4) can be less than 110°, preferably less than 90°.

In the position in Figure 4, the collector grapples 22 are rotated inside the protection space 18. If it is wished to rotate the collector grapple 22 into the protection space 18, the throat 14 should be open, i.e. trees cannot then be in the throat. With the aid of the shaft pin 10', the pivoting of between the first arm 2 and the second arm 3 permits the collector grapple 22 to be pulled out of the protected space 18 or from between the trees 4 in the throat 14. The cylinder 6' then shortens, rotating the first arm 2 relative to the pivot pin 9 towards the open position. At the same time, the second arm 3 rotates around the shaft pin 10' as the spring 11 tensions. Once the first arm 2 has rotated to the open position, the second arm 3 opens to the position 1 with the aid of the spring 11.

According to one embodiment, when using two collector grapples, the multi-process machine includes means for locking one collector grapple into a position, in which case when the cylinder shortens only the other collector grapple changes its position. The second arm of the collector grapple can include a debarking surface, by means of which the surface of the tree is debarked.

When using two collector grapples, the collector grapples are on different planes to each other in the direction between the plates of the frame of the multi-process machine, i.e. one collector grapple is closer to one of the frame plates and the other collector grapple is closer to the other frame plate. Thus, the collector grapples operate overlapping each other. According to Figure 2, when using two collector grapples, a synchronizing arm 33 is preferably pivoted to the first arm 2 of one collector grapple 22 and is pivoted at the other end to an extension 26 of the first arm 2 of the other collector grapple 22. With the aid of the synchronizing arm, the movements of the collector grapples are thus synchronized, so that the collector grapples cannot rotate to different positions relative to each other when using the operating device. The synchronizing arm can be a conventional synchronizing arm according to the prior art. The synchronizing arm is not shown in Figures 1 and 3 - 5.

The length of the first arm 2 and the location of the support pin 5' are preferably dimensioned in such a way that the shaft pin 10' between the first arm 2 and the second arm 3 meets the support pin 5' when the first arm 2 rotates around the pivot pin 9 towards the closed position of the collector grapple 22. The protrusion 12.1 attached to the second arm 3 will then meet the support pin 5' at the correct point. Thus, the second arm 3 of the collector grapple 22 can be made long, because, thanks to the protrusion 12.1 and the support pin 5', the collector grapple 22 is caused to rotate around the support pin 5' close to the opposite collector grapple that also strengthens the frame 1. With the aid of this rotation, the stroke of the cylinder 6' is saved.

The first arm 2 and the second arm 3 are preferably at an angle of about 30 - 50° relative to each other in the fully open position of the collector grapples. It is thus possible to shorten the stroke required from the operating device. The length of the protrusion acting preferably as a support surface for the second arm can be 20 - 35 % of the length of the second arm, in which case a force sufficient to rotate the second arm will be achieved with the aid of the protrusion.

Figure 5 shows the collector grapples of the multi-process machine seen from below. The distance between the plates 24 of the frame 1 can be 80 - 150 mm, i.e. the collector grapple's 22 first arm 2 and second arm 3, the cylinder 6', and the support pin 5' are all between the plates 24. Further, the first arm 2 is preferably shaped as a loop, in which case the cylinder 6' and second arm 3 can be attached between the first arm 2.

The external construction and attachment of the multi-process machine can be identical to those of a device like that disclosed in patent FI 123 155 B. The cylinder used for the operation of the collector grapple is preferably a hydraulic cylinder.

## Claims

1. Multi-process machine for cutting and handling trees, which is arranged to be suspended from the boom of a loader device, which said multi-process machine (30) includes
- a frame (1),
- stripping grabs (36) arranged to gather trees (4) into a throat (14) formed by them and the frame (1),
- a collector grapple (22) pivoted to the frame (1), arranged to move between open and closed positions, and also to support the trees (4) gathered into the throat (14),
- an operating device (6) for operating the collector grapple (22),
in which the collector grapple (22) includes a first arm (2) and a second arm (3) pivoted to each other and arranged in such a way that the second arm (3) can be pulled out from between the trees (4) collected in the throat (14), **characterized in that** the said second arm (3) includes a rotating support surface (12) for rotating the second arm (3) relative to the first arm (2) and the said frame (1) includes a counter-surface (5) located in such a way that as the collector grapple (22) rotates, the support surface (12) meets the counter-surface (5), rotating the second arm (3) relative to the first arm (2).

2. Multi-process machine according to Claim 1, **characterized in that** the multi-process machine (30) includes a protected space (18) inside the frame (1), into which the collector grapple (22) is arranged to be rotated to protect it from impacts.

3. Multi-process machine according to Claim 1 or 2, **characterized in that** the said support surface (12) is a protrusion (12.1) formed in the vicinity of the pivot (10) between the first arm (2) and the second arm (3).

4. Multi-process machine according to Claim 3, **characterized in that** the said protrusion (12.1) is essentially perpendicular relative to the longest dimension of the second arm (3).

5. Multi-process machine according to any of Claims 1 - 4, **characterized in that** the first arm (2) is pivoted directly to the frame (1) with the aid of the pivot pin (9).

6. Multi-process machine according to any of Claims 3-5, **characterized in that** the distance between the said pivot pin (9) and the counter-surface (5) is essentially as great as the distance between the pivot pin (9) and the pivot (10).

7. Multi-process machine according to any of Claims 3-6, **characterized in that** the said operating device (6) is pivoted to an extension (26) belonging to the first arm (2), on the opposite side of the pivot pin (9) relative to the pivot (10).

8. Multi-process machine according to any of Claims 1 - 6, **characterized in that** the said counter-surface (5) is a support pin (5') fitted between the plates (24) belonging to the frame (1).

9. Multi-process machine according to Claim 7, **characterized in that** the said support pin (5') is located at a distance of at most the diameter of the support pin (5') from the throat (14) formed by the plates (24).

10. Multi-process machine according to any of Claims 1 - 9, **characterized in that** the rotation of the first arm (2) is less than 110°, preferably less than 90°.

11. Multi-process machine according to any of Claims 3 - 10, **characterized in that** the said protrusion (12.1) includes a bevelled point in order to facilitate rotation.

12. Multi-process machine according to any of Claims 1 - 11, **characterized in that** the multi-process machine (30) includes two collector grapples (22) and two counter-surfaces (5).

13. Multi-process machine according to Claim 12, **characterized in that** both collector grapples (22) are operated with the aid of a common operating device (6).

14. Multi-process machine according to Claim 12 or 13, **characterized in that** the multi-process machine (30) includes means for operating the collector grapples (22) independently of each other.

15. Multi-process machine according to any of Claims 12 - 14, **characterized in that** the said collector grapples (22) are symmetrical.

## Patentansprüche

1. Multi-Prozess-Maschine zum Schneiden und Bearbeiten von Bäumen, die hängend am Ausleger eines Ladegeräts angeordnet ist, und die besagte Multi-Prozess-Maschine (30) umfasst
einen Rahmen (1),
- entastende Greifer (36), die zum Einbringen von Bäumen (4) in einen Schlund (14), der durch die Greifer und den Rahmen (1) gebildet wird, angeordnet sind,
- einen Sammelgreifer (22), der drehbar gelagert am Rahmen (1) angebracht und so angeordnet ist, dass er sich zwischen geöffneter und geschlossener Position bewegt und ebenso die Bäume (4) stützt, die in den Schlund (14) eingebracht werden,
- einen Stellantrieb (6) für die Betätigung des Sammelgreifers (22),
in der Multi-Prozess-Maschine zum besagten Sammelgreifer (22) ein erster Arm (2) und ein zweiter Arm (3) gehören, die miteinander drehbar gelagert und so angeordnet sind, dass der zweite Arm (3) aus den im Schlund (14) gesammelten Bäumen (4) herausgezogenen werden kann, **dadurch gekennzeichnet, dass** der besagte zweite Arm (3) eine drehbare Stützfläche (12) zum Drehen des zweiten Arms (3) im Verhältnis zum ersten Arm (2) aufweist und der besagte Rahmen (1) eine Gegenlauffläche (5) hat, die so angeordnet ist, dass wenn sich der Sammelgreifer (22) dreht, die Stützfläche (12) auf die Gegenlauffläche (5) trifft und den zweiten Arm (3) im Verhältnis zum ersten Arm (2) dreht.

2. Multi-Prozess-Maschine gemäß Patentanspruch 1, **dadurch gekennzeichnet, dass** die Multi-Prozess-Maschine (30) im Rahmen (1) einen geschützten Raum (18) aufweist, in dem der Sammelgreifer (22) so angeordnet ist, dass er sich dreht, um vor Schlägen geschützt zu sein.

3. Multi-Prozess-Maschine gemäß Patentanspruch 1 oder 2, **dadurch gekennzeichnet, dass** die besagte Stützfläche (12) einer Ausstülpung (12.1) gleicht, die sich in der Umgebung des Gelenks (10) zwischen dem ersten Arm (2) und dem zweiten Arm (3) bildet.

4. Multi-Prozess-Maschine gemäß Patentanspruch 3, **dadurch gekennzeichnet, dass** die besagte Ausstülpung (12.1) im Wesentlichen lotrecht im Verhältnis zur längsten Abmessung des zweiten Arms (3) steht.

5. Multi-Prozess-Maschine gemäß einem der Patentansprüche 1 - 4, **dadurch gekennzeichnet, dass** der erste Arm (2) direkt am Rahmen (1) mit Hilfe eines Gelenkzapfens (9) drehbar gelagert ist.

6. Multi-Prozess-Maschine gemäß einem der Patentansprüche 3 - 5, **dadurch gekennzeichnet, dass** der Abstand zwischen dem besagten Gelenkzapfen (9) und der Gegenlauffläche (5) im Wesentlichen so groß wie der Abstand zwischen dem Gelenkzapfen (9) und dem Gelenk (10) ist.

7. Multi-Prozess-Maschine gemäß einem der Patentansprüche 3 - 6, **dadurch gekennzeichnet, dass** der besagte Stellantrieb (6) drehbar an einer Verlängerung (26) gelagert ist, die zum ersten Arm (2) gehört, auf der gegenüberliegenden Seite des Gelenkzapfens (9) im Verhältnis zum Gelenk (10).

8. Multi-Prozess-Maschine gemäß einem der Patentansprüche 1 - 6, **dadurch gekennzeichnet, dass** die besagte Gegenlauffläche (5) ein Stützzapfen (5') ist, der zwischen den zum Rahmen (1) gehörenden Platten (24) befestigt ist.

9. Multi-Prozess-Maschine gemäß dem Patentanspruch 7, **dadurch gekennzeichnet, dass** der besagte Stützzapfen (5') höchstens in einem Abstand entsprechend dem Durchmesser des Stützzapfens (5') vom Schlund (14), der durch die Platten (24) gebildet wird, angebracht ist.

10. Multi-Prozess-Maschine gemäß einem der Patentansprüche 1 - 9, **dadurch gekennzeichnet, dass** die Drehung des ersten Arms (2) weniger als 110° beträgt, vorzugsweise weniger als 90°.

11. Multi-Prozess-Maschine gemäß einem der Patentansprüche 3 - 10, **dadurch gekennzeichnet, dass** zur besagten Ausstülpung (12.1) eine abgeschrägte Spitze gehört, um die Drehbewegung zu erleichtern.

12. Multi-Prozess-Maschine gemäß einem der Patentansprüche 1 - 11, **dadurch gekennzeichnet, dass** zur Multi-Prozess-Maschine (30) zwei Sammelgreifer (22) und zwei Gegenlaufflächen (5) gehören.

13. Multi-Prozess-Maschine gemäß dem Patentanspruch 12, **dadurch gekennzeichnet, dass** beide Sammelgreifer (22) mit Hilfe eines gemeinsamen Stellantriebs (6) betrieben werden.

14. Multi-Prozess-Maschine gemäß dem Patentanspruch 12 oder 13, **dadurch gekennzeichnet, dass** zur Multi-Prozess-Maschine (30) Hilfsmittel gehören, um die Sammelgreifer (22) unabhängig voneinander zu betreiben.

15. Multi-Prozess-Maschine gemäß einem der Patentansprüche 12 - 14, **dadurch gekennzeichnet, dass** die besagten Sammelgreifer (22) symmetrisch sind.

## Revendications

1. Abatteuse multifonctionnelle pour couper et manipuler des arbres, qui est agencée de sorte à être suspendue à la flèche d'un dispositif de chargement, laquelle abatteuse multifonctionnelle (30) comprend
- un cadre (1),
- des griffes d'ébranchage (36) agencées de sorte à rassembler les arbres (4) dans une gorge (14) formée par celles-ci et le cadre (1),
- un grappin collecteur (22) attaché au cadre (1) par pivot, agencé de sorte à se déplacer entre les positions ouverte et fermée, et également à soutenir les arbres (4) rassemblés dans la gorge (14),
- un dispositif de manoeuvre (6) pour manoeuvrer le grappin collecteur (22),
où le grappin collecteur (22) comprend un premier bras (2) et un second bras (3) attachés l'un à l'autre par pivot et disposés de sorte que le second bras (3) peut être retiré d'entre les arbres (4) rassemblés dans la gorge (14), **caractérisée en ce que** ledit second bras (3) comprend une surface de soutien (12) rotative pour entraîner le second bras (3) en rotation par rapport au premier bras (2) et ledit cadre (1) comprend une contre-surface (5) située de sorte que quand le grappin collecteur (22) tourne, la surface de soutien (12) vient en contact avec la contre-surface (5), entraînant le second bras (3) en rotation par rapport au premier bras (2).

2. Abatteuse multifonctionnelle selon la revendication 1, **caractérisée en ce que** l'abatteuse multifonctionnelle (30) comprend, à l'intérieur du cadre (1), un espace protégé (18) à l'intérieur duquel le grappin collecteur (22) est agencé pour être tourné pour le protéger contre les impacts.

3. Abatteuse multifonctionnelle selon la revendication 1 ou 2, **caractérisée en ce que** ladite surface de support (12) est une protubérance (12.1) formée à proximité du pivot (10) entre le premier bras (2) et le second bras (3).

4. Abatteuse multifonctionnelle selon la revendication 3, **caractérisée en ce que** ladite protubérance (12.1) est essentiellement perpendiculaire par rapport à la dimension la plus longue du second bras (3).

5. Abatteuse multifonctionnelle selon l'une quelconque des revendications 1 à 4, **caractérisée en ce que** le premier bras (2) est attaché par pivot directement au cadre (1) à l'aide de l'axe de pivot (9).

6. Abatteuse multifonctionnelle selon l'une quelconque des revendications 3 à 5, **caractérisée en ce que** la distance entre ledit axe de pivot (9) et la contre-surface (5) est essentiellement aussi grande que la distance entre l'axe de pivot (9) et le pivot (10).

7. Abatteuse multifonctionnelle selon l'une quelconque des revendications 3 à 6, **caractérisée en ce que** ledit dispositif de manoeuvre (6) est attaché par pivot à une rallonge (26) appartenant au premier bras (2), du côté opposé de l'axe de pivot (9) par rapport au pivot (10).

8. Abatteuse multifonctionnelle selon l'une quelconque des revendications 1 à 6, **caractérisée en ce que** ladite contre-surface (5) est une goupille de soutien (5') installée entre les plaques (24) appartenant au cadre (1).

9. Abatteuse multifonctionnelle selon la revendication 7, **caractérisée en ce que** ladite goupille de soutien (5') est située à une distance mesurant au moins le diamètre de la goupille de soutien (5') de la gorge (14) formée par les plaques (24).

10. Abatteuse multifonctionnelle selon l'une quelconque des revendications 1 à 9, **caractérisée en ce que** la rotation du premier bras (2) est moins de 110°, de préférence moins de 90°.

11. Abatteuse multifonctionnelle selon l'une quelconque des revendications 3 à 10, **caractérisée en ce que** ladite protubérance (12.1) comprend une extrémité biseautée pour faciliter la rotation.

12. Abatteuse multifonctionnelle selon l'une quelconque des revendications 1 à 11, **caractérisée en ce que** l'abatteuse multifonctionnelle (30) comprend deux grappins collecteurs (22) et deux contre-surfaces (5).

13. Abatteuse multifonctionnelle selon la revendication 12, **caractérisée en ce que** les deux grappins collecteurs (22) sont manoeuvrés à l'aide d'un dispositif de manoeuvre (6) en commun.

14. Abatteuse multifonctionnelle selon la revendication 12 ou 13, **caractérisée en ce que** l'abatteuse multifonctionnelle (30) comprend des moyens pour manoeuvrer les grappins collecteurs (22) indépendamment l'un de l'autre.

15. Abatteuse multifonctionnelle selon l'une quelconque des revendications 12 à 14, **caractérisée en ce que** lesdits grappins collecteurs (22) sont symétriques.
